# EUROPEAN PATENT SPECIFICATION

(11) **EP 3 974 734 B1**
(45) Date of publication and mention of the grant of the patent: **09.10.2024**
(21) Application number: 21199749.9
(22) Date of filing: 29.09.2021
(51) Int. Cl.: F24C 15/20, B01D 45/08, B01D 45/18

(54) **EXTRACTOR HOOD FOR A COOKING HOB WITH A GREASE FILTER AND A COLLECTION PORTION FOR COLLECTING CONDENSATE**
DUNSTABZUGSHAUBE FÜR EIN KOCHFELD MIT FETTFILTER UND EINEM AUFFANGTEIL ZUM AUFFANGEN VON KONDENSAT
HOTTE ASPIRANTE POUR TABLE DE CUISSON AVEC FILTRE À GRAISSES ET PORTION DE RÉCUPÉRATION POUR LA RÉCUPÉRATION DES CONDENSATS

(30) Priority: 29.09.2020 IT 202000022936
(43) Date of publication of application: 30.03.2022
(73) Proprietor: Faber S.p.A., 60044 Fabriano (Ancona) (IT)
(72) Inventor: RAPISARDA, Andrea, 60035 Jesi (An) (IT); DI CARMINE, Walter, 66054 Vasto (Ch) (IT); PALAZZI, Walter, 60044 Fabriano (An) (IT); GASPARINI, Alberto, 60044 Fabriano (An) (IT)
(74) Representative: LBP Lemcke, Brommer & Partner Patentanwälte mbB

(56) References cited:
- EP-A1- 1 410 833
- EP-A1- 1 705 430
- WO-A1-01/23070
- DE-U1- 9 311 478
- US-A- 4 690 701
- US-A1- 2020 041 140
- US-B2- 6 776 152

## Description

The subject of the present invention is an extractor hood for hobs which is provided with a filter for the grease.

Extractor hoods have been known for some time, which can be placed above hobs and are provided with a filter for the grease, the filter conventionally being defined by a metal body with slots which can retain the grease aspirated by the hood with vapours (or fumes) which are generated on the hob during the preparation of food. These hoods comprise a structure containing a fan which can aspirate said vapours through an opening of the hood which is placed above the hob. On said opening there is conventionally placed a filtering unit which can retain the grease associated with these vapours, said filtering unit comprising said filter for the grease.

The filter can be placed directly at this opening, or it can be associated with one or more frames of the filter, according to the width of the hood (for example a hood with a width of 60 cm, 90 cm, 120 cm, etc.) with slots which can permit the passage of the vapour towards the filter, the filter being further to the inside of the structure of the hood than the frame(s).

A problem with the filters for the grease of the extractor hoods, in particular those filters which are made of metal, is that this grease condenses on the filter, and can drip onto the hob below, with obvious consequences of a hygienic and aesthetic nature.

EP2565543 faces the problem of dripping of the condensed grease onto the hob. This prior text describes a hob comprising an aspiration region (the opening of the structure of the hood), where there are placed at least two adjacent filters for the grease which are supported by a container for the filters. At least two adjacent (flat) filtering screens are placed at the filters for the grease, and are further to the outside of the aspiration region than these filters. In other words, the filters for the grease are further to the inside of the corresponding screens than the structure of the hood.

Between the filters there is present a space or distance placed corresponding to a similar space for aspiration of the vapour, which space is present between the filtering screens, the aspiration space between these screens being smaller than the distance which is present between the filters, such that the screens cover the active filtering surfaces of said filters.

The filters are placed at a distance from the screens, and between them there is thus present a passage which can receive the vapour aspirated, and give rise to a centrifugal effect thereon, such as to assist the aspiration and filtering thereof.

Between each pair of filters, above the space for aspiration of the vapour of the filtering screens, there is placed an element for collection and guiding of the condensate which collects the condensate of the vapour aspirated, and makes the condensate fall onto the filtering screens. This element for collection and guiding of the condensate comprises at least one dripping edge which is placed at a distance above a corresponding filtering screen; said element has an inclined or rounded form along which the condensate runs as far as each dripping edge. Preferably this element has the form of an isosceles or even scalene triangle.

However, the known solution collects the condensate inside the passage between each filtering screen and the corresponding filter for the grease, said condensate thus accumulating on the surface of this screen and limiting the dimension of the passage in which the aspirated vapour moves. Furthermore, the condensate is always affected by this aspirated vapour, and, because of the temperature of the vapour, it can dissolve once more (or not condense completely), and can exit from the aspiration space which is present between the adjacent filtering screens, transported by the vapour aspirated.

US 2020/041140 A1 discloses a grease filter comprising a repeating series of individual convoluted first baffle walls and a repeating series of individual convoluted second baffle walls.

DE 93 11 478 U1 discloses a separator filter and a flame protection filter. Both filters have an outer metal frame which is filled with metal wool and a plurality of individual metal profile rails, respectively, which rails are arranged in the metal frame in two planes parallel and at respective distances from one another.

EP 1 705 430 A1 discloses an extractor hood with at least one grease filter, the filter body of which consists of several layers of expanded aluminium metal or nonwoven.

US 4,690,701 A discloses a reusable grease filter having a plurality of individual louvers held in place by a surrounding frame.

US 6,776,152 B2 discloses a range hood with a double absorption filter, which filter is formed by a parallel integration of a plurality of longitudinal hollow bodies each made of thick paper.

The objective of the present invention is to provide an extractor hood for hobs with a filter for the grease, which hood operates efficiently and in a manner which is improved compared with the prior art in retaining the condensate of the vapours aspirated, and in particular of the grease present therein, while being of simple and thus inexpensive design.

Another objective of the invention is to provide a hood of the aforementioned type which permits recuperation of said condensate of the vapours from the hood.

A further objective is to provide a hood of the aforementioned type which makes possible optimal filtering performance.

Another objective is to provide an extractor hood of the aforementioned type which is simple to produce.

These objectives and others, which will become apparent to persons skilled in the art, are achieved by an extractor hood according to the appended claims.

For better understanding of the present invention, and purely by way of non-limiting example, the following drawings are appended, in which:
figure 1 shows a view in perspective from below, partly in cross-section, of an extractor hood according to the invention;
figure 2 shows a view in perspective from the front, partly in cross-section, and with parts removed for the sake of greater clarity, of the hood in figure 1;
figure 3 shows a view in perspective from the rear, of a filtering unit of the hood in figure 1;
figure 4 shows the part indicated as A in figure 3, enlarged;
figure 5 shows a view in perspective from below, of the filtering unit in figure 3;
figure 6 shows an enlarged view in perspective of a part of the filtering unit in figure 3;
figure 7 shows a front view of the part shown in figure 6;
figure 8 shows a partial view in perspective from above of a first variant of the invention;
figure 9 shows a front view of what is shown in figure 8;
figure 10 shows a partial view in perspective from above of a second variant of the invention;
figure 11 shows a front view of what is shown in figure 10;
figure 12 shows an enlarged view of part of a further variant of the invention;
figures 13 and 14 show respectively a view in perspective and a front view of a variant of the part of figures 6 and 7;
figures 15 and 16 show respectively a partial view in perspective and a front view of a variant of what is shown in figures 8 and 9; and
figures 17 and 18 show respectively a partial view in perspective and a front view of what is shown in figures 10 and 11.

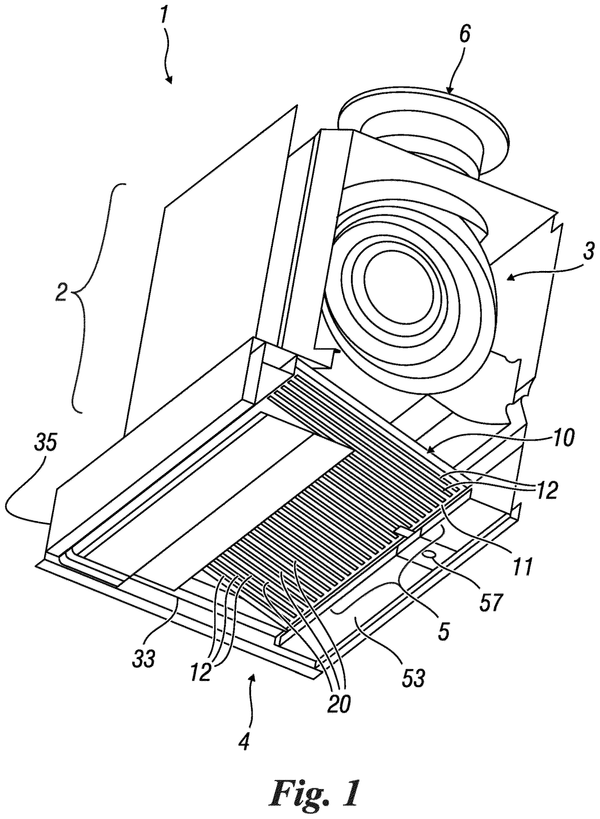

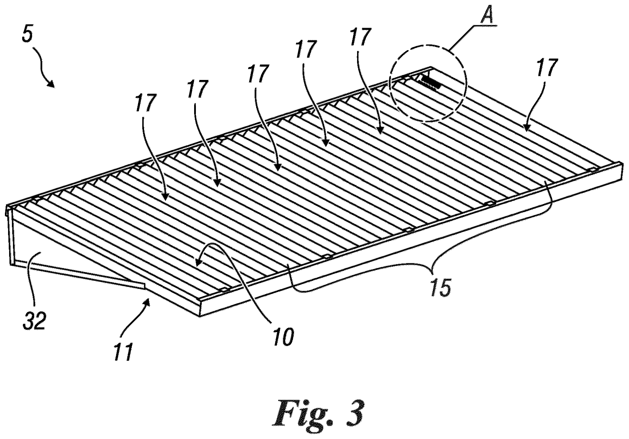

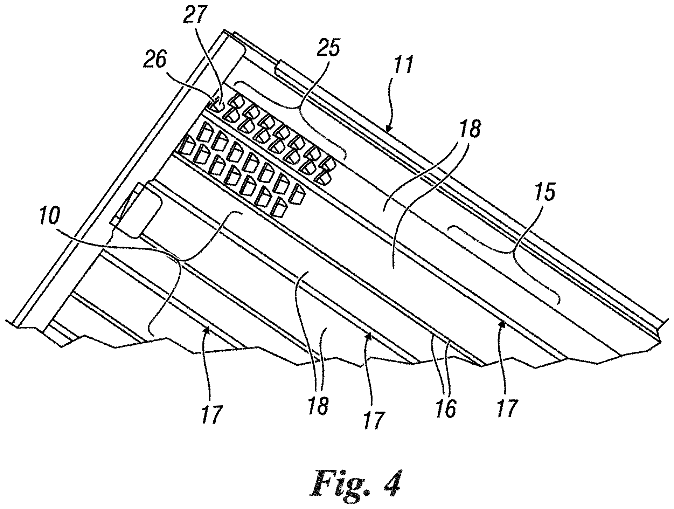

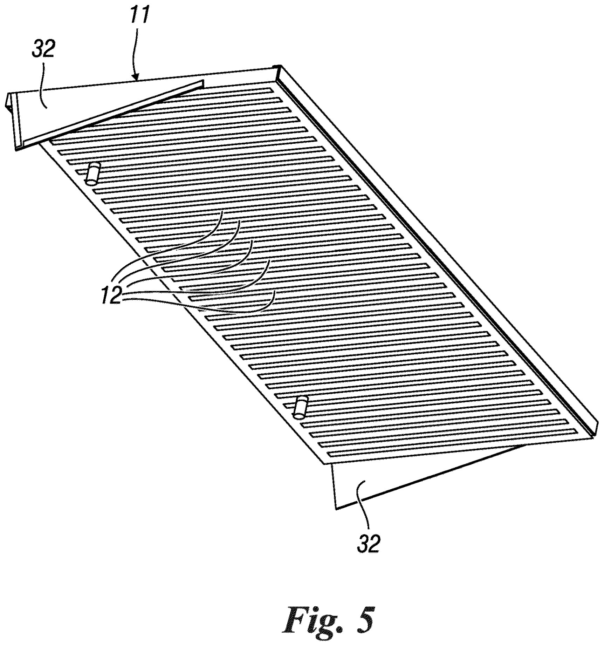

With reference to the aforementioned figures 1-7, an extractor hood is generally indicated as 1, and comprises a structure 2 containing a fan 3 which can aspirate through an opening of the hood 4 vapours which are generated by food being prepared on a hob above which the hood 1 is placed. The substance aspirated is filtered by a filtering unit 5 placed at the opening of the hood 4, and is discharged outside the hood 1 from an outlet of the hood 6. In a known manner, the vapours aspirated and filtered can be readmitted into the environment where the hob is located, or they can be ejected outside said environment.

The filtering unit 5 is placed in the structure 2, and is supported in any known manner therein, such as to be able to be removed from the opening 4 in order for it to be cleaned. This filtering unit 5 comprises a filter 10 for the grease, which is generally made of metal plate (stainless steel or aluminium alloy), associated with a frame 11 of the filter. This frame has a plurality of slots 12 through which the vapours emitted by the food being prepared can be aspirated by the fan 3. The width of the slots 12 can be between 4 mm and 8 mm, advantageously between 5 and 7 mm.

These vapours contain water, grease, and possibly small particles which are released from the food and are filtered by the filter 10 for the grease before reaching the fan 3 and being ejected from the hood 1.

The filter 10 for the grease is further to the inside of the structure of the hood 2 than the frame 11 of the filter is.

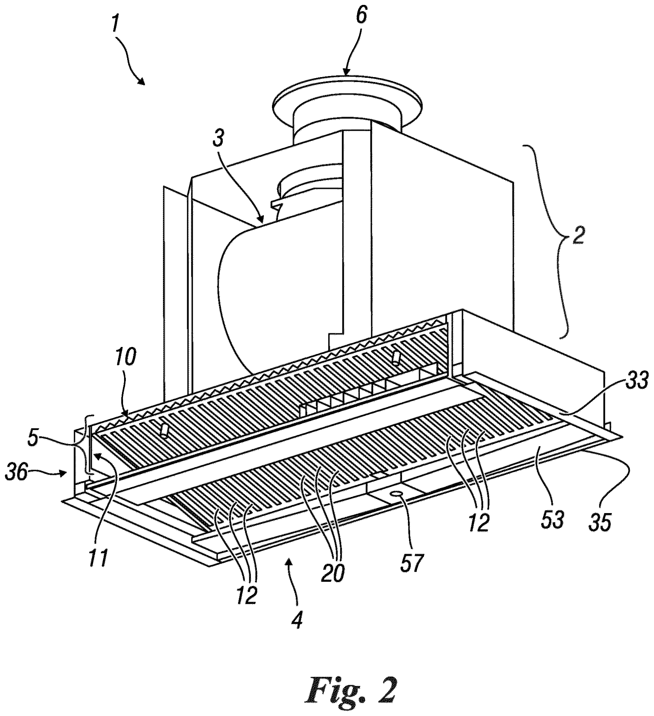

The filter is thus placed on the outside of the opening 4 (see figures 1 and 2, for example).

The filter 10 for the grease comprises a body 15 of the folded or pleated type, and has a plurality of filtering elements 17 with a triangular cross-section (without a base) and in the form of an inverted "V" relative to the frame 11 of the filter, which elements are connected to one another at the ends 16 of their adjacent lateral portions or inclined sides 18, said body being in a single piece (as in the figures). In a comparative example not part of the invention, said body could be defined by a plurality of modular elements brought towards one another and in contact with one another by means of the ends 16 of the inclined sides 18 of their end lateral filtering elements 17. As an alternative to the triangular cross-section in the form of an inverted "V", the filtering elements 17 can have a form with a curved profile, but are connected to one another by means of the adjacent ends 16 of their lateral portions 18, which in this case are curved.

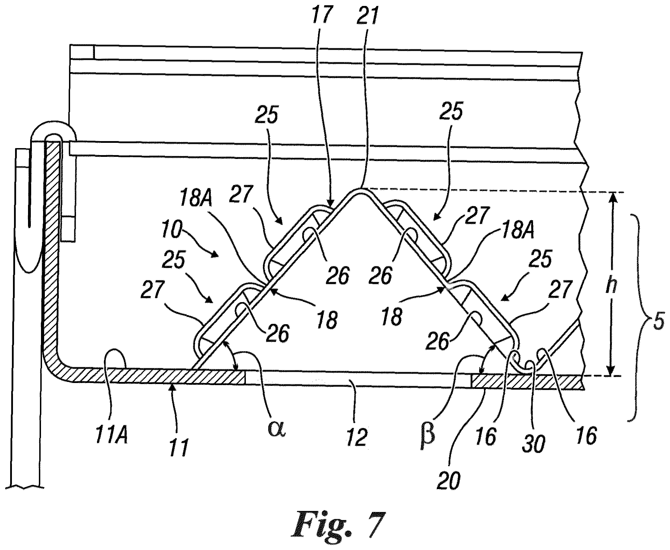

In the case of elements 17 in the form of an inverted "V", each of them has an angle at the base (α or β) formed with the frame 11 which is preferably between 40° and 60°, and is advantageously 45°, and a height h which is preferably between 5 and 20 mm, and is advantageously between 6 or 15 mm (see figure 7).

These filtering elements 17 are in contact with the frame 11 of the filter, and are supported by their ends 16 on this frame at areas 20 thereof which are present between the slots 12. By this means, a vertex part 21, or part for joining of the sides 18 (i.e. the part 21 of each filtering element 17 which is further from the frame 11 of the filter) is placed within a corresponding slot 12.

Within each side 18 of the filtering elements 17 there are present passages 25 for the vapours (shown only partly on the sides 18 of the filter), which passages penetrate into the filtering unit 5 via the corresponding slot 12 of the frame 11 of the filter 11. These passages 25 comprise an opening 26 superimposed at a distance by a cover 27 which is integral with said side 18, and is obtained therefrom by mechanical deformation of the side itself.

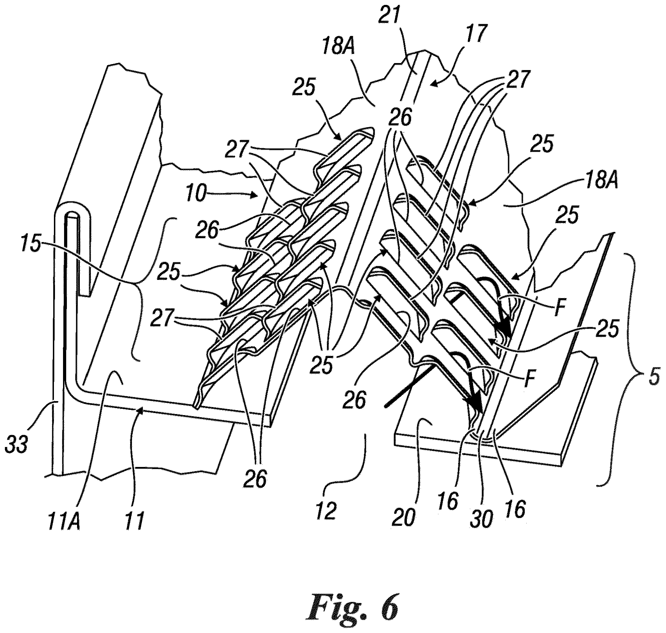

As previously stated, the vapours pass through the slot 12 and reach the passages 25 of the filter 10. They then penetrate inside the openings 26, but come into contact with the corresponding covers 27. When they meet the covers, they are deflected onto an internal surface 18A of the side 18 (internal relative to the structure 2, i.e. facing towards the fan 3), and condense, falling towards the frame 11 of the filter (see the arrows F in figure 6), i.e. they fall onto a collection or "downstream" position 30 of the filter 10 for the grease, where they converge and join together or come into contact with the ends 16 of two adjacent filtering elements 17. It will be appreciated that, in the case of filtering elements of terminal lateral ends of the filter 10 for the grease, the condensed vapours fall directly onto an inner side 11A of the frame 11 of the filter.

It should be noted that the filtering unit 5 (and thus the filter 10 for the grease and the frame 11 of the filter) is arranged inclined at the opening 4. This is obtained for example thanks to the triangular lateral supports 32 of said frame 11, which are supported on a perimeter frame 33 of the hood 1, delimiting the opening 4.

It will be appreciated that other means can be provided for maintaining the filtering unit 5 inclined relative to a plane of the opening 4. The inclination faces towards the rear part 35 of the hood 1, which is distant from the front side 36 close to a user who approaches the hub below (not shown).

The inclination of the filtering unit 5 relative to a plane of the unit 4 can be between 5° and 45°, and preferably between 5° and 30°.

Thanks to the inclination of the filtering unit 5, the condensate thereon is collected by a collection element 53 placed in the vicinity of the rear part 35 of the hood, from where it can be removed. The removal can take place by removing the condensate collection element 53. An alternative for the elimination of the water which is present in the collection unit can be constituted by a hole 57 provided in the lowest area of the collection element 53, which hole is normally closed, and is opened by the user by means of a conventional mechanism which permits the discharge thereof.

Thanks to the form of an inverted "V" of the filtering element 17, the flow of the condensed vapours (or "condensate") is facilitated towards the collection areas (downstream portions 30 of the filter 10 or inner side 11A of the frame 11), which condensate then descends towards the rear part 35 of the hood. The passages 25 (in the form of "blind slats" or "louvres") have a geometry and arrangement such that the drops of condensate which form on the inner surfaces 18A of the sides 18 of the filtering elements 17 do not fall onto the hub below through the slots 20 of the frame of the filter.

The suction pressure created by the aspiration of the hood facilitates the removal of the drops of condensate which form on the surfaces 18A, simultaneously removing them from the openings 26 of the passages 25 of the filtering element 17.

It will be appreciated that the passages 25 can also be produced with forms and/or embodiments which are different from those described in relation with the figures, which represent only a non-limiting embodiment of the invention.

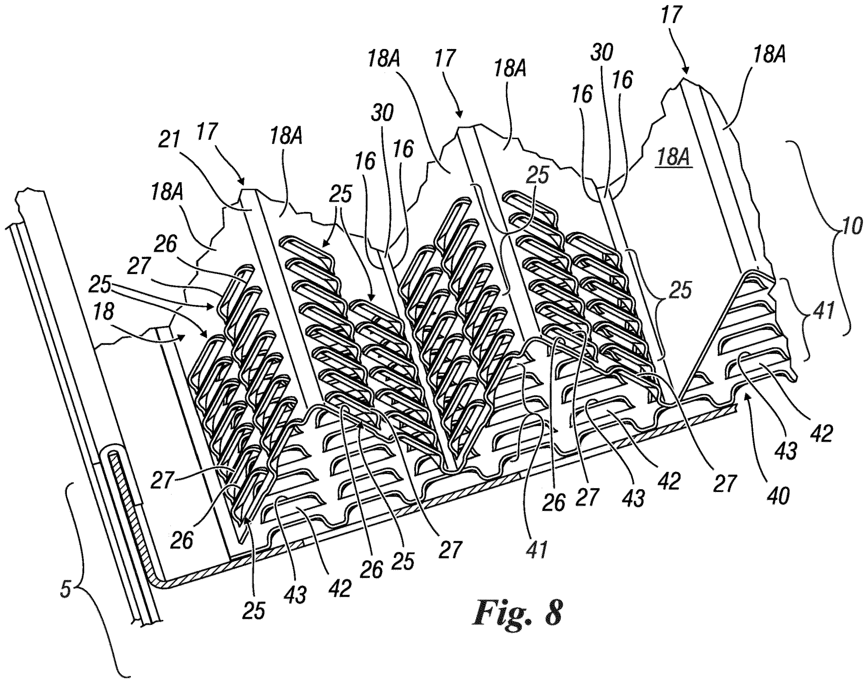

Figures 8-11 show two variants of the invention. In these figures, parts which correspond to, or are identical to, those already described in relation with figures 1-7 are indicated with the same numerical references.

According to the two variants (figures 8-9 and 10-11), between the filter 10 for the grease and the frame 11 of the filter a further, drawn (flat) filtering layer 40 is present, supported on the inner side 11A of the frame 11. It will be appreciated that this further filtering layer 40 is also provided with passages 41 similar to those 25 of the filtering element 17 of the filter 10 for the grease, i.e. the passages each have an opening 42 and a corresponding cover 43 which is placed at a distance from the opening, and is integral with the filtering layer 40.

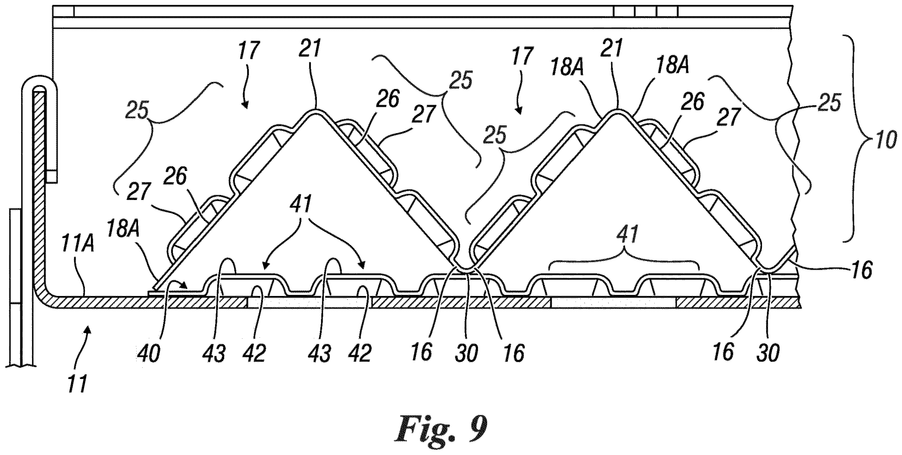

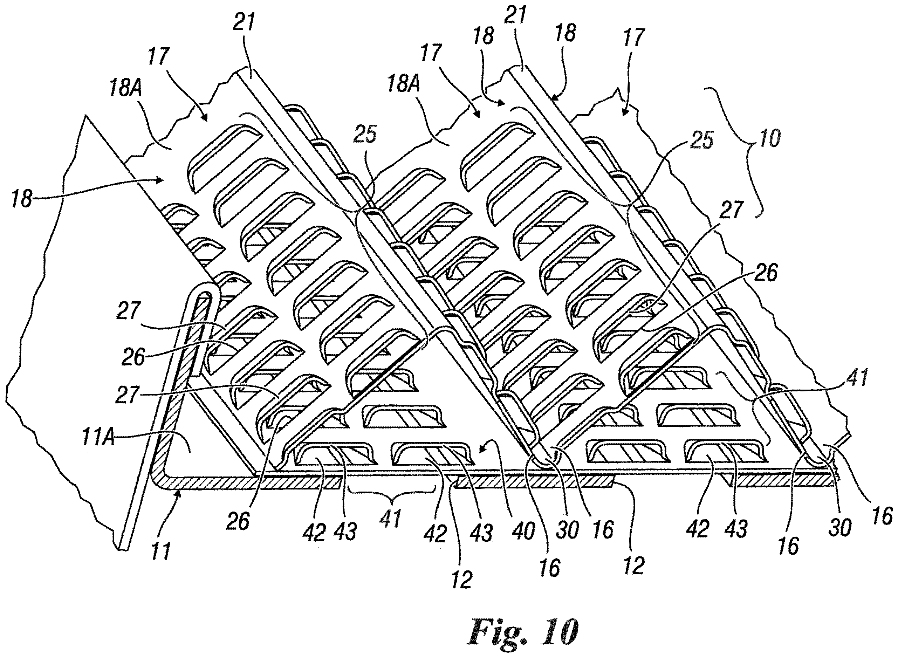

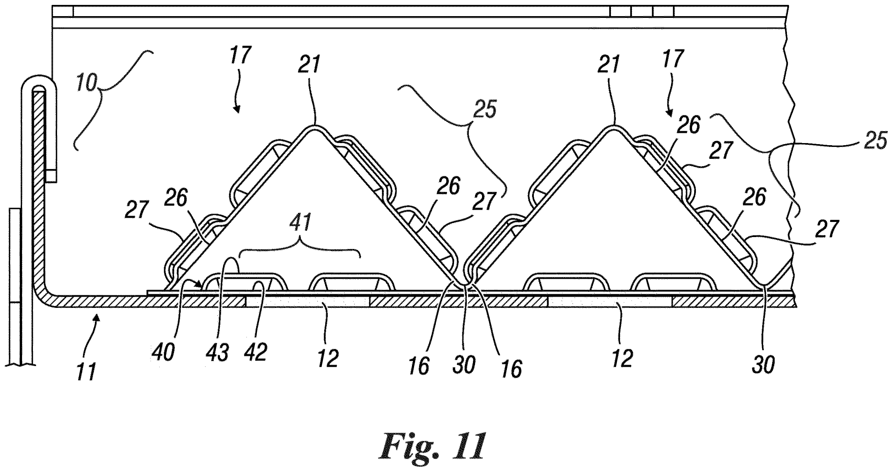

In the variants in figures 8 and 9, the flat filtering layer has the passages 41 also at the areas 20 of the frame 11 of the filter, whereas in the variant in figures 10 and 11, these passages 41 are not provided at said areas 20.

In given conditions of aspiration or speed of passage of the air aspirated, these variants produce a type of controlled condensation on the filter 10, thus contributing towards reducing the excess condensate which can form in the metal areas of the frame 11 of the filter.

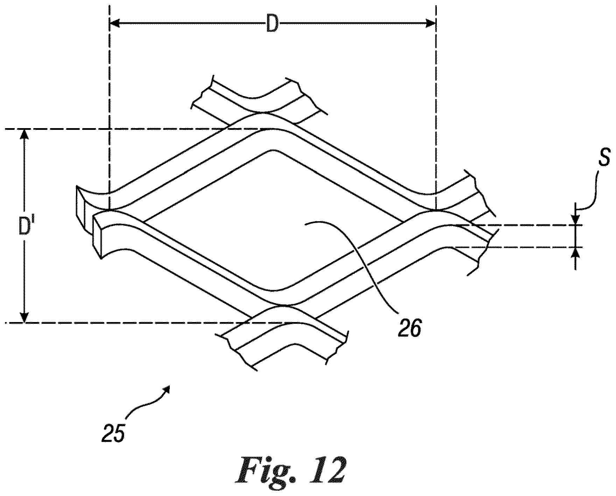

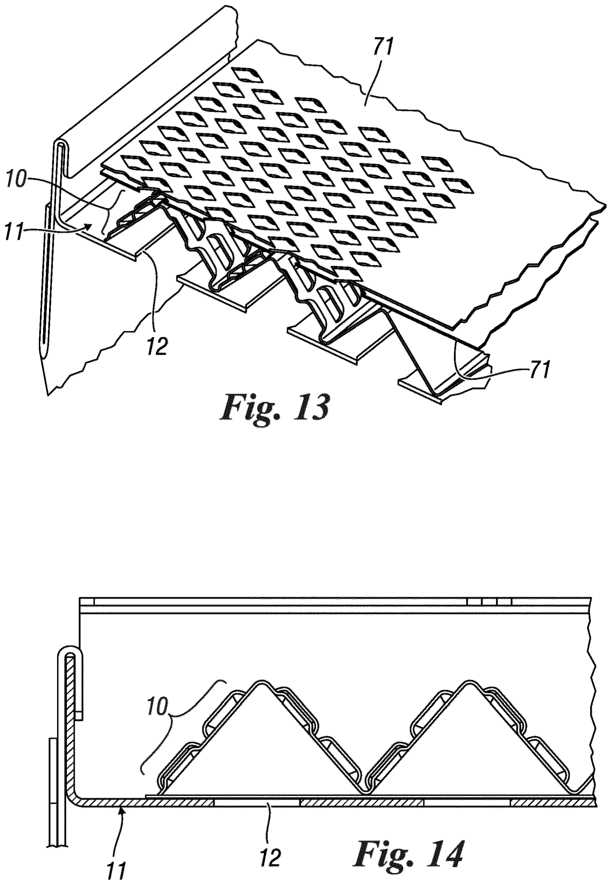

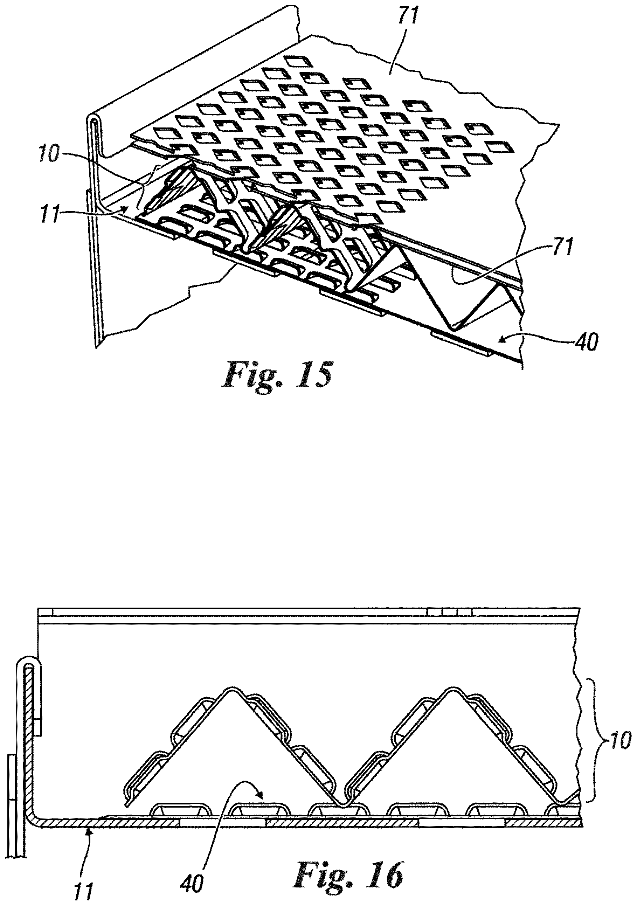

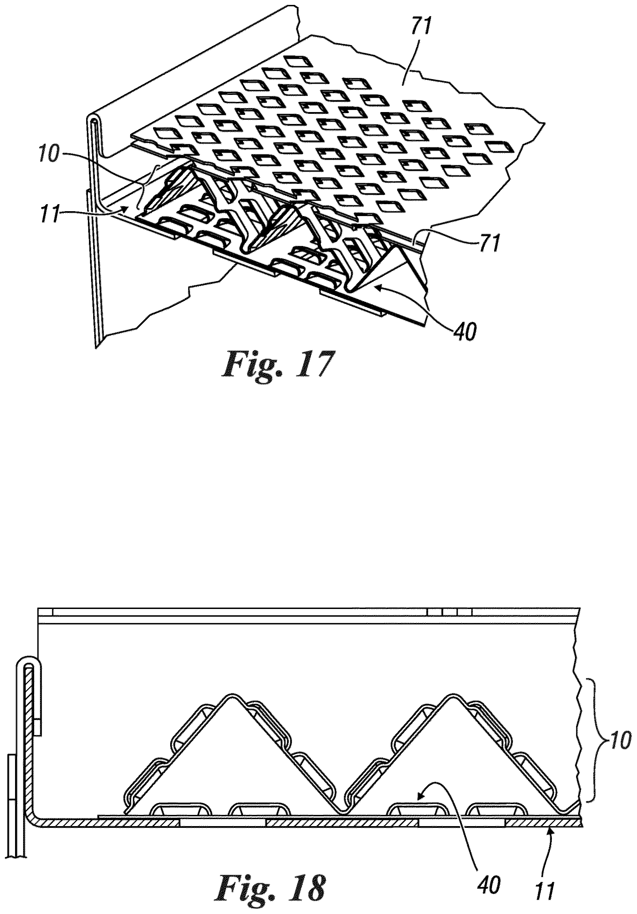

The figures show filters 10 for the grease with filtering elements which have passages 25 for the vapour with a particular configuration. As previously stated, the passages can also have different forms, such as the one shown in figure 12, with the form of a rhombus or polygon. This is a possible variant of the passages 25 which are present on the filter 10, produced by drawing the metal plate which defines the filter, without drawing machining, which is also more economical. This version is also represented in figures 13-18, which show at least one further metal filtering layer 71 (in the figures there are two of them, superimposed) added on top of the pleated filter 10. These filtering layers 71 placed above the filter 10 serve the purpose of retaining the particles of grease and oil more efficiently.

In addition, the thickness of the filter 10, the material from which it is obtained, and the geometry and dimensions of the openings 26 of the passages 25, can be different.

For example, with reference to figure 12, the thickness S can be between 0.2 and 1 mm, and advantageously between 0.3 and 0.7 mm. The width D of the openings 26 can be between 3 and 10 mm, preferably between 4 and 5 mm, and advantageously between 4 and 4.5 mm. The other dimension D1 of the rhombus of the openings 26 can be between 1 and 6 mm, and preferably between 2 and 4 mm.

The materials used can be stainless steel, or metal alloys, preferably aluminium alloys.

Finally, the filter 10 for the grease can be coated with a non-absorbent or absorbent coating such as to improve the effect of non-dripping through the slots 12 of the frame 11 for the filter. It should be understood that the filter can also be used to filter in general vapours and fumes which generate on a hob during the preparation of food. These treatments also serve the purpose of modifying the adhesion capacity of the surfaces of the filtering layers 40 and 71 and of the filter 10, and of facilitating the removal of dirt which accumulates therein during cooking, and advantageously have an antibacterial effect in the case of the absorbent treatment.

Finally, the hood can also be placed in a different position relative to the hob, and not necessarily above it.

## Claims

1. Extractor hood (1) for a hob which can aspirate vapours or fumes generated during the preparation of food on said hob, the hood (1) comprising a structure (2) containing a fan (3) for the aspiration of said vapours or fumes through an opening (4) of the hood (1), at said opening (4) there being provided a filtering unit (5) comprising at least one metal filter, namely a filter (10) for the grease, associated with a frame (11) of the filter which has slots (12) for the passage of said vapours or fumes towards the metal filter (10), said slots (12) being separated by flat areas (20), said filtering unit (5) being supported by said structure (2) of the hood, said metal filter being further to the inside of said structure than the frame (11) of the filter, wherein said filtering unit (5) is inclined relative to the opening of the hood (4) where it is positioned, the metal filter (10) being pleated and being supported on said frame for the filter, said metal filter (10) having a plurality of adjacent filtering elements (17) which are distant from said frame (11) for the filter, with a vertex part (21), and are connected to one another at ends (16) of their lateral portions (18) which are at least close to said frame (11) for the filter, said lateral portions (18) having a plurality of distributed passages (25) which can deflect the vapours or fumes aspirated onto a surface (18A) of said lateral portions (18) inside the hood (2) where said vapours or fumes condense, the condensate then being collected inside the hood (1) such as to prevent dripping onto the hob, wherein the filter (10) for the grease comprises a body (15) of the pleated type, which body has said plurality of filtering elements (17), said body (15) being in a single piece.

2. Extractor hood according to claim 1, **characterised in that**, between the adjacent filtering elements (17) there is present a portion (30) for collection of the condensate which falls along the surfaces (18A) of the lateral portions (18) of said adjacent filtering elements (17).

3. Extractor hood according to claim 1, **characterised in that** the frame (11) for the filter has an inner side (11A) which can collect the condensate coming from the surface (18A) of the lateral portion (18) of the filtering element (17) placed at the end of the metal filter (10).

4. Extractor hood according to claim 2, **characterised in that** said collection portion (30) between adjacent filtering elements (17) is placed on one of said flat areas (20) which is present between two slots (12) adjacent to the frame for the filter.

5. Extractor hood according to claim 1 **characterised in that** the vertex part (21) of each filtering element (17) is placed at a slot (12) of the frame for the filter.

6. Extractor hood according to claim 1, **characterised in that** each filtering element alternatively has the form of an inverted "V" relative to the frame (11) for the filter, or a development with a curved profile.

7. Extractor hood according to claim 1, **characterised in that** each passage (25) of the plurality of distributed passages comprises an opening (26) which is superimposed at a distance by a cover (27) integral with the lateral portion (18) of the corresponding filtering element (17).

8. Extractor hood according to claim 1, **characterised in that**, between each metal filter (10) and the frame (11) for the filter, there is present a drawn filtering layer (40) provided with passages (41) for the vapours or fumes aspirated.

9. Extractor hood according to claim 8, **characterised in that** these passages (41) of said drawn filtering layer (40) are present also at flat areas (20) between the slots of the frame (11) for the filter.

10. Extractor hood according to claim 1, **characterised in that**, above the vertex part (21) of each filtering element (17) there is placed at least one metal filtering layer, said at least one layer preferably being made of drawn plate.

11. Extractor hood according to claim 1, **characterised in that** it comprises at least one of the following characteristics:
- the metal filter is in the form of a blind with openings having the geometry of blind slats;
- the metal filter has the function of filtering the grease which is present in the vapours or fumes aspirated;
- the metal filter has through-holes obtained by drawing of the metal filter (10).

12. Extractor hood according to claim 1, **characterised in that** the metal filter is alternatively coated with an absorbent coating or a non-absorbent coating.

## Patentansprüche

1. Dunstabzugshaube (1) für ein Kochfeld, die Dämpfe oder Rauch absaugen kann, die während der Zubereitung von Speisen auf dem Kochfeld erzeugt werden, wobei die Haube (1) eine Struktur (2) umfasst, die einen Lüfter (3) für die Absaugung der Dämpfe oder des Rauchs durch eine Öffnung (4) der Haube (1) enthält, wobei an der Öffnung (4) eine Filtereinheit (5) vorgesehen ist, die mindestens einen Metallfilter umfasst, nämlich einen Filter (10) für das Fett, der mit einem Rahmen (11) des Filters verknüpft ist, der Schlitze (12) für den Durchtritt der Dämpfe oder des Rausch zum Metallfilter (10) aufweist, wobei die Schlitze (12) durch flache Bereiche (20) getrennt sind, wobei die Filtereinheit (5) von der Struktur (2) der Haube getragen wird, wobei der Metallfilter weiter im Inneren in der Struktur liegt als der Rahmen (11) des Filters, wobei die Filtereinheit (5) relativ zur Öffnung der Haube (4), an der sie positioniert ist, geneigt ist, wobei der Metallfilter (10) plissiert ist und auf dem Rahmen für den Filter getragen wird, wobei der Metallfilter (10) eine Vielzahl von aneinandergrenzenden Filterelementen (17) aufweist, die von dem Rahmen (11) für den Filter entfernt liegen, mit einem Scheitelteil (21), und an Enden (16) ihrer seitlichen Abschnitte (18), die sich mindestens in der Nähe des Rahmens (11) für den Filter befinden, miteinander verbunden sind, wobei die seitlichen Abschnitte (18) eine Vielzahl von verteilten Durchlässen (25) aufweisen, die die abgesaugten Dämpfe oder den Rauch auf eine Oberfläche (18A) der seitlichen Abschnitte (18) in Inneren der Haube (2), an der die Dämpfe oder der Rauch kondensieren, ablenken können, wobei das Kondensat dann im Inneren der Haube (1) gesammelt wird, um ein Tropfen auf das Kochfeld zu verhindern, wobei der Filter (10) für das Fett einen Körper (15) vom plissierten Typ umfasst, wobei der Körper die Vielzahl von Filterelementen (17) aufweist, wobei der Körper (15) aus einem einzigen Stück besteht.

2. Dunstabzugshaube nach Anspruch 1, **dadurch gekennzeichnet, dass** zwischen den aneinandergrenzenden Filterelementen (17) ein Abschnitt (30) zum Sammeln des Kondensats vorhanden ist, das entlang der Oberflächen (18A) der seitlichen Abschnitte (18) der aneinandergrenzenden Filterelemente (17) herabfällt.

3. Dunstabzugshaube nach Anspruch 1, **dadurch gekennzeichnet, dass** der Rahmen (11) für den Filter eine Innenseite (11A) aufweist, die das von der Oberfläche (18A) des seitlichen Abschnitts (18) des Filterelements (17), das am Ende des Metallfilters (10) platziert ist, kommende Kondensat sammeln kann.

4. Dunstabzugshaube nach Anspruch 2, **dadurch gekennzeichnet, dass** der Sammelabschnitt (30) zwischen aneinandergrenzenden Filterelementen (17) auf einem der flachen Bereiche (20) platziert ist, der zwischen zwei Schlitzen (12) an den Rahmen für den Filter angrenzend vorhanden ist.

5. Dunstabzugshaube nach Anspruch 1, **dadurch gekennzeichnet, dass** der Scheitelteil (21) jedes Filterelements (17) an einem Schlitz (12) des Rahmens für den Filter platziert ist.

6. Dunstabzugshaube nach Anspruch 1, **dadurch gekennzeichnet, dass** jedes Filterelement wahlweise die Form eines umgekehrten "V" in Bezug auf den Rahmen (11) für den Filter oder einen Verlauf mit einem gekrümmten Profil aufweist.

7. Dunstabzugshaube nach Anspruch 1, **dadurch gekennzeichnet, dass** jeder Durchlass (25) der Vielzahl von verteilten Durchlässen eine Öffnung (26) umfasst, die in einem Abstand von einer Abdeckung (27) überlagert wird, die mit dem seitlichen Abschnitt (18) des entsprechenden Filterelements (17) einstückig ist.

8. Dunstabzugshaube nach Anspruch 1, **dadurch gekennzeichnet, dass** zwischen jedem Metallfilter (10) und dem Rahmen (11) für den Filter eine gezogene Filterschicht (40) vorhanden ist, die mit Durchlässen (41) für die abgesaugten Dämpfe oder den Rauch versehen ist.

9. Dunstabzugshaube nach Anspruch 8, **dadurch gekennzeichnet, dass** diese Durchlässe (41) der gezogenen Filterschicht (40) auch an ebenen Bereichen (20) zwischen den Schlitzen des Rahmens (11) für den Filter vorhanden sind.

10. Dunstabzugshaube nach Anspruch 1, **dadurch gekennzeichnet, dass** über dem Scheitelteil (21) jedes Filterelements (17) mindestens eine Metallfilterschicht platziert ist, wobei die mindestens eine Schicht vorzugsweise aus gezogenem Blech besteht.

11. Dunstabzugshaube nach Anspruch 1, **dadurch gekennzeichnet, dass** sie mindestens eines der folgenden Merkmale umfasst:
- der Metallfilter liegt in Form einer Jalousie mit Öffnungen vor, die die Geometrie von Jalousielamellen aufweisen;
- der Metallfilter weist die Funktion des Filterns des in den abgesaugten Dämpfen oder dem Rauch vorhandenen Fetts auf;
- der Metallfilter weist Durchgangslöcher auf, die durch Ziehen des Metallfilters (10) erhalten werden.

12. Dunstabzugshaube nach Anspruch 1, **dadurch gekennzeichnet, dass** der Metallfilter wahlweise mit einer absorbierenden Beschichtung oder einer nicht absorbierenden Beschichtung beschichtet ist.

## Revendications

1. Hotte aspirante (1) pour table de cuisson pouvant aspirer les vapeurs ou fumées générées lors de la préparation d'aliments sur ladite table de cuisson, la hotte (1) comprenant une structure (2) contenant un ventilateur (3) pour l'aspiration desdites vapeurs ou fumées à travers une ouverture (4) de la hotte (1), au niveau de ladite ouverture (4) étant prévue une unité de filtration (5) comprenant au moins un filtre métallique, à savoir un filtre (10) pour la graisse, associé à un cadre (11) du filtre qui présente des fentes (12) pour le passage desdites vapeurs ou fumées vers le filtre métallique (10), lesdites fentes (12) étant séparées par des zones planes (20), ladite unité de filtration (5) étant supportée par ladite structure (2) de la hotte, ledit filtre métallique étant plus à l'intérieur de ladite structure que le cadre (11) du filtre, dans laquelle ladite unité de filtration (5) est inclinée par rapport à l'ouverture de la hotte (4) où elle est positionnée, le filtre métallique (10) étant plissé et prenant appui sur ledit cadre du filtre, ledit filtre métallique (10) présentant une pluralité d'éléments filtrants (17) adjacents qui sont distants dudit cadre (11) du filtre, avec une partie sommet (21), et sont reliés les uns aux autres aux extrémités (16) de leurs parties latérales (18) qui sont au moins proches dudit cadre (11) du filtre, lesdites parties latérales (18) présentant une pluralité de passages distribués (25) qui peuvent dévier les vapeurs ou fumées aspirées sur une surface (18A) desdites parties latérales (18) à l'intérieur de la hotte (2) où lesdites vapeurs ou fumées se condensent, le condensat étant alors collecté à l'intérieur de la hotte (1) de sorte à éviter les gouttes sur la table de cuisson, dans laquelle le filtre (10) pour la graisse comprend un corps (15) du type plissé, lequel corps présente ladite pluralité d'éléments filtrants (17), ledit corps (15) étant en une seule pièce.

2. Hotte aspirante selon la revendication 1, **caractérisée en ce que**, entre les éléments filtrants (17) adjacents est présente une partie (30) de collecte du condensat qui tombe le long des surfaces (18A) des parties latérales (18) desdits éléments filtrants (17) adjacents.

3. Hotte aspirante selon la revendication 1, **caractérisée en ce que** le cadre (11) du filtre présente un côté interne (11A) apte à collecter les condensats provenant de la surface (18A) de la partie latérale (18) de l'élément filtrant (17) placé à l'extrémité du filtre métallique (10).

4. Hotte aspirante selon la revendication 2, **caractérisée en ce que** ladite partie de collecte (30) entre des éléments filtrants (17) adjacents est placée sur l'une desdites zones planes (20) qui est présente entre deux fentes (12) adjacentes au cadre du filtre.

5. Hotte aspirante selon la revendication 1 **caractérisée en ce que** la partie sommet (21) de chaque élément filtrant (17) est placée au niveau d'une fente (12) du cadre du filtre.

6. Hotte aspirante selon la revendication 1, **caractérisée en ce que** chaque élément filtrant présente en variante la forme d'un "V" inversé par rapport au cadre (11) du filtre, ou une évolution avec un profil courbe.

7. Hotte aspirante selon la revendication 1, **caractérisée en ce que** chaque passage (25) de la pluralité de passages distribués comprend une ouverture (26) sur laquelle est superposé à une certaine distance un couvercle (27) solidaire de la partie latérale (18) de l'élément filtrant (17) correspondant.

8. Hotte aspirante selon la revendication 1, **caractérisée en ce que**, entre chaque filtre métallique (10) et le cadre (11) du filtre, est présente une couche filtrante emboutie (40) pourvue de passages (41) pour les vapeurs ou fumées aspirées.

9. Hotte aspirante selon la revendication 8, **caractérisée en ce que** ces passages (41) de ladite couche filtrante emboutie (40) sont également présents au niveau de zones planes (20) entre les fentes du cadre (11) du filtre.

10. Hotte aspirante selon la revendication 1, **caractérisée en ce que**, au-dessus de la partie sommet (21) de chaque élément filtrant (17) est placée au moins une couche filtrante métallique, ladite au moins une couche étant de préférence réalisée en tôle emboutie.

11. Hotte aspirante selon la revendication 1, **caractérisée en ce qu'**elle comprend au moins l'une des caractéristiques suivantes :
- le filtre métallique se présente sous la forme d'un store avec des ouvertures présentant la géométrie de lamelles de store ;
- le filtre métallique a pour fonction de filtrer la graisse qui est présente dans les vapeurs ou fumées aspirées ;
- le filtre métallique présente des trous traversants obtenus par emboutissage du filtre métallique (10).

12. Hotte aspirante selon la revendication 1, **caractérisée en ce que** le filtre métallique est en variante recouvert d'un revêtement absorbant ou d'un revêtement non absorbant.
